(19) Europäisches Patentamt
European Patent Office
Office européen des brevets

(11) **EP 4 006 270 B1**

(12) **EUROPÄISCHE PATENTSCHRIFT**

(45) Veröffentlichungstag und Bekanntmachung des
Hinweises auf die Patenterteilung:
**23.04.2025 Patentblatt 2025/17**

(21) Anmeldenummer: **21210960.7**

(22) Anmeldetag: **29.11.2021**

(51) Internationale Patentklassifikation (IPC):
**E04H 12/08** (2006.01)          **F03D 13/20** (2016.01)
**F03D 13/40** (2016.01)

(52) Gemeinsame Patentklassifikation (CPC):
**E04H 12/08; E04H 12/085; F03D 13/20;
F03D 13/40**

(54) **VERFAHREN ZUM TRANSPORT EINER TURMSEKTION, TURMSEKTION UND VERFAHREN ZUR EINRICHTUNG EINER WINDENERGIEANLAGE**

METHOD FOR TRANSPORTING A TOWER SECTION, TOWER SECTION AND METHOD FOR INSTALLING A WIND TURBINE

PROCÉDÉ DE TRANSPORT D'UNE SECTION DE TOUR, SECTION DE TOUR ET PROCÉDÉ D'INSTALLATION D'UNE ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **27.11.2020 DE 102020131574**

(43) Veröffentlichungstag der Anmeldung:
**01.06.2022 Patentblatt 2022/22**

(73) Patentinhaber: **Wobben Properties GmbH
26607 Aurich (DE)**

(72) Erfinder:
• **Knoop, Frank
26607 Aurich (DE)**
• **Mertens, René
16515 Oranienburg (DE)**

(74) Vertreter: **Eisenführ Speiser
Patentanwälte Rechtsanwälte PartGmbB
Postfach 10 60 78
28060 Bremen (DE)**

(56) Entgegenhaltungen:
**US-A1- 2011 176 904      US-A1- 2017 253 169
US-B2- 10 041 479**

**Beschreibung**

Die Erfindung betrifft ein Verfahren zum Transport einer Turmsektion für eine Windenergieanlage. Weiterhin betrifft die Erfindung eine entsprechende Turmsektion für eine Windenergieanlage, sowie ein Verfahren zur Errichtung einer Windenergieanlage an einem Errichtungsort.

Verfahren zum Transportieren einer Turmsektion für eine Windenergieanlage sind allgemein bekannt. In solchen Verfahren werden Turmsektionen mit zumeist vormontiertem Anschlussflansch in einer Transportlage derart gehalten, dass ihre Längsachse im Wesentlichen horizontal verläuft und sie eine vertikale Höhe aufweisen, welche in dieser Position die Transporthöhe definiert. Ferner weisen Turmsektionen in dieser Transportlage eine horizontale Breite auf, welche orthogonal zur vertikalen Höhe sowie der Längsachse verläuft und die Transportbreite definiert.

Für den Transport auf öffentlichen Straßen existieren nationale Vorgaben, welche u.a. die zulässige Transportbreite und Transporthöhe begrenzen. Dabei überschreitet die zulässige Transportbreite vielfach die zulässige Transporthöhe der Fahrzeuge einschließlich ihrer Ladung. So ist beispielsweise in Deutschland eine maximale Transportbreite von 5 m zulässig, ohne zusätzliche Schutzmaßnahmen, wie beispielsweise polizeiliche Begleitung. Hingegen ist eine maximale Transporthöhe von lediglich 4,3 m zulässig, bedingt durch Brücken und dergleichen. Aufgrund der oftmals symmetrischen Ausbildung des Querschnitts von Turmsektionen führt die Begrenzung der zulässigen Transporthöhe somit gleichermaßen zu einer notwendigen Reduktion der Transportbreite. Die Querschnittsfläche der Turmsektion wird somit insgesamt begrenzt und beim Transport der Turmsektion insbesondere die zulässige Transportbreite nicht ausgenutzt. Mit dem Ziel trotz der beschränkten Querschnittsfläche auch bei großen Gondeln eine ausreichende Stabilität und Tragfähigkeit der Turmsektion zu gewährleisten, werden dabei die Wandstärken der Wandung der Turmsegmente häufig erhöht. Das damit einhergehende Mehrgewicht erschwert wiederum den Transport und das Handling des Turmsegments am Errichtungsort.

US 2011/0176904 A1 offenbart ein Verfahren und eine Anordnung zum Transport eines Turmsegments einer Windenergieanlage. Während des Transports wird eine Längsachse des Turmsegments im Wesentlichen horizontal ausgerichtet und das Turmsegment durch auf eine Wand des Turmsegments ausgeübte Zugkräfte im Querschnitt verformt. US 2017/0253169 A1 offenbart ein System und ein Verfahren für den Transport von Türmen einer Windenergieanlage sowie eine entsprechende Transportvorrichtung. Die Turmsegmente weisen dabei Befestigungsschnittstellen zur Verbindung mit der Transportvorrichtung auf. US 10,041,479 B2 offenbart klappbare Turmsegmente und ein entsprechendes Transportverfahren.

Mit dem Ziel, Windenergieanlagen mit Turmsektionen zu errichten, die in der Transportlage die maximal zulässige Transporthöhe übersteigen würden, werden die Turmsektionen vielfach entlang der Längsachse in zwei Teile geteilt. Die geteilte Turmsektion muss dann am Errichtungsort aufwendig gefügt werden. Die zwei dadurch entstehenden Fügestellen führen zu einer Schwächung der Turmsektion und damit insgesamt zu einer Reduzierung der Traglast. Ferner bedingt das Fügen der geteilten Turmsektion eine erhöhte Montagezeit und damit Mehrkosten gegenüber kleineren ungeteilten Türmen. Ferner führt die Teilung der Turmsektion verglichen mit kleineren gewalzten Stahlrohrtürmen, auch bereits zu erhöhten Herstellungskosten.

Es war daher Aufgabe der vorliegenden Erfindung, die aus dem Stand der Technik bekannten Nachteile möglichst weitgehend zu überwinden. Insbesondere lag der Erfindung die Aufgabe zugrunde, ein Verfahren zum Transportieren einer Turmsektion bereitzustellen, welches eine optimierte Ausnutzung der gesetzlich vorgegebenen zulässigen Transporthöhen und Transportbreiten ermöglicht, sodass Turmsektionen transportiert werden können, bei denen die nachteiligen Effekte der Längsteilung vermieden werden können. Ferner war Aufgabe der vorliegenden Erfindung eine Turmsektion und insbesondere ein Verfahren zum Errichten einer Windenergieanlage mit einer solchen Turmsektion am Errichtungsort bereitzustellen.

Die Erfindung löst die zugrundeliegende Aufgabe durch ein Verfahren zum Transport einer Turmsektion nach Anspruch 1, eine Turmsektion für eine Windenergieanlage nach Anspruch 11 sowie einem Verfahren zur Errichtung einer Windenergieanlage nach Anspruch 14.

Das Verfahren gemäß Anspruch 1, zum Transport einer Turmsektion für eine Windenergieanlage, umfasst folgende Schritte:

A) Bereitstellen einer Turmsektion, die dazu eingerichtet ist, in einer vorbestimmten Transportlage transportiert zu werden, wobei die Turmsektion in der Transportlage eine sich in horizontaler Richtung erstreckende Längsachse und eine sich entlang der Längsachse erstreckende Wandung aufweist, wobei die Turmsektion dazu eingerichtet ist, in einem unbelasteten Zustand in der Transportlage eine erste vertikale Höhe einzunehmen,

B) Aufbringen einer Verformungskraft auf die Wandung zum elastischen Verformen zumindest eines Abschnittes der Turmsektion derart, dass die Turmsektion in einem elastisch verformten Zustand in der Transportlage eine zweite vertikale Höhe einnimmt, die kleiner als die erste vertikale Höhe, und

C) Arretieren der Turmsektion in dem elastisch verformten Zustand.

Die erste und zweite vertikale Höhe definieren im Sinne der Erfindung dabei jeweils die maximale Höhe der Turmsektion entlang ihrer Längsachse. Durch das erfindungsgemäße Verfahren kann eine Turmsektion einer Windenergieanlage, somit in vertikaler Richtung durch elastische Verformung abgeflacht werden, nämlich dadurch, dass die Turmsektion in der Transportlage in dem elastisch verformten Zustand eine zweite vertikale Höhe einnimmt, die kleiner ist als die erste vertikale Höhe.

Zumeist übersteigt die zulässige Transportbreite die zulässige Transporthöhe, was sich die Erfinder vorteilhaft zu Nutze machten, indem die Turmsektion gemäß dem erfindungsgemäßen Verfahren zumindest abschnittsweise derart elastisch verformt wird, dass ihre vertikale Höhe in der Transportlage reduziert wird. Die elastische Verformung erfolgt in dem erfindungsgemäßen Verfahren ferner derart, dass etwaige elastische Verformungen, die zu einer Zunahme der Transportbreite führen, die zulässige Transportbreite nicht übersteigen. Somit kann die Transporthöhe, also die vertikale Höhe der Turmsektion in der Transportlage, von einer ersten vertikalen Höhe auf eine zweite vertikale Höhe reduziert werden, die insbesondere die nationalen Vorgaben hinsichtlich der Transporthöhe erfüllt. Somit kann die Größe der Windenergieanlage bezogen auf ihre Querschnittsfläche maximiert werden.

Vorzugsweise umfasst das Verfahren einen oder beider der Schritte: D) Bereitstellen einer Transportvorrichtung zum Halten und Transportieren der Turmsektion in der Transportlage, und/oder E) Verbringen der Turmsektion auf die Transportvorrichtung in der Transportlage - falls etwa die Turmsektion nicht bereits in Transportlage bereitgestellt wird. Somit wird das Handling der Turmsektion in dem erfindungsgemäßen Verfahren durch die Bereitstellung einer Transportvorrichtung erleichtert und die Turmsektion kann sicher gehalten und transportiert werden.

Weiter vorzugsweise erfolgt bzw. erfolgen einer oder beide der Schritte D) und E) vor Schritt B), sodass die Verformungskraft in der Transportlage auf die Wandung aufgebracht wird. Es werden insbesondere die Schritte B) und C) dadurch erleichtert, dass die Turmsektion bereits in die Transportlage verbracht und vorzugsweise auf der Transportvorrichtung fixiert ist.

Weiter vorzugsweise umfasst die Wandung einen fließfähigen Werkstoff und die mittels der Verformungskraft in der Turmsektion induzierte Spannung ist kleiner als die 0,2% Dehngrenze und/oder die Elastizitätsgrenze des Werkstoffs.

Als Elastizitätsgrenze bzw. Fließgrenze wird diejenige mechanische Spannung bezeichnet, oberhalb der ein Werkstoff zum Fließen übergeht. Belastungen oberhalb der Elastizitätsgrenze bewirken eine bleibende plastische Verformung und der Werkstoff kann sich unter einer weniger stark ansteigenden oder sogar abfallenden Last verformen. Im Falle einer Zugbeanspruchung spricht man von der Streckgrenze oder, wenn das genaue Einsetzen des Fließens nicht exakt bestimmbar ist, von der Dehngrenze. Die 0,2% Dehngrenze ist diejenige einachsige mechanische Spannung, bei der die auf die Anfangslänge der Probe bezogene bleibende Dehnung nach Entlastung 0,2 % beträgt. Diese ist insbesondere bei ausscheidungsgehärteten Werkstoffen, wie beispielsweise Aluminiumlegierungen, im Gegensatz zu der Elastizitätsgrenze eindeutig bestimmbar.

Somit werden plastische Deformationen der Wandung von mehr als 0,2 % wirksam vermieden. Mit dem Ziel eine ausreichende Reduktion der Transporthöhe realisieren zu können, ist es vorteilhaft, die Verformungskraft so zu wählen, dass die dadurch induzierte Spannung sich an die Elastizitätsgrenze bzw. die 0,2%-Dehngrenze annähert, diese jedoch nicht übersteigt.

Vorzugsweise liegt die mittels der Verformungskraft in der Turmsektion induzierte Spannung in einem Bereich von 40% bis 95% der Fließgrenze oder der 0,2% Dehngrenze des Werkstoffs, besonders bevorzugt in einem Bereich von 50% bis 90%. In diesen Bereichen wird noch mit ausreichender Wahrscheinlichkeit sichergestellt, dass transportbedingte Stoßlasten und dergleichen ungeahnte auftretende Umstände nicht zu einer ungewollten plastischen Verformung der Turmsektion führen.

Gemäß einer bevorzugten Ausführungsform weist die Turmsektion einen symmetrischen, insbesondere runden, ovalen oder polygonalen Querschnitt mit einem Flächenmittelpunkt auf, wobei die Verformungskraft in Richtung des Flächenmittelpunktes in die Wandung der Turmsektion eingeleitet wird. Ein runder, ovaler oder polygonaler mit einem Flächenmittelpunkt hat den Vorteil, dass durch die Vermeidung scharfer Kanten bzw. generell der Vermeidung von Kanten Kerbspannungen reduziert und die Ausfallsicherheit und Tragfähigkeit der Turmsektion erhöht wird. Insbesondere kann sich dabei die auf die Wandung wirkende Kraft besser auf die gesamte Wandung verteilen, welche sich in Richtung der Längsachse um den Querschnitt herum erstreckt. Im Sinne der Erfindung kann der Querschnitt entlang der Längsachse dabei sowohl konstant, als auch veränderlich ausgebildet sein. Auch können die beschriebenen Querschnitte der Turmsektionen entlang der gesamten Längsachse oder aber nur abschnittsweise vorliegen und beispielsweise miteinander kombiniert werden. Vorzugsweise ist die Wandung dabei geschlossen ausgebildet.

Gemäß einer weiteren bevorzugten Ausführungsform weist die Wandung zwei Kantenbereiche mit jeweils einer in Längsrichtung verlaufenden Kante auf, die in Umfangsrichtung beabstandet zueinander sind, wobei die Kanten beim elastischen Verformen der Turmsektion aneinander vorbeigeführt werden, sodass die Kantenbereiche im elastisch verformten Zustand der Turmsektion einander überlappen. Somit kann eine elastische Verformung mittels einer reduzierten Verformungskraft erfolgen, verglichen mit der zum elastischen Verformen einer Turmsektion mit geschlossener Wandung aufzuwendenden Verformungskraft. Dies erleichtert insbesondere den Schritt B) des erfindungsgemäßen Verfahrens. Die Wandung verformt sich dabei durch das aneinander Vorbeiführen der Kanten in der Querschnittsebene der Turmsektion orthogonal zur Längsachse spiral- bzw. schneckenförmig.

Vorzugsweise weist die Turmsektion einen entlang der Längsachse konstanten, insbesondere einen runden, ovalen oder polygonalen, Querschnitt auf und die Turmsektion wird vollständig entlang ihrer Längsachse elastisch verformt gemäß Schritt B). Somit ist die Turmsektion aufgrund des konstanten Querschnitts einfach zu fertigen und wird gemäß Schritt B) des erfindungsgemäßen Verfahrens vollständig elastisch verformt, sodass entlang der Längsachse eine konstante vertikale Höhe gewährleistet ist.

Gemäß einer weiteren bevorzugten Ausführungsform ist die Turmsektion zumindest abschnittsweise derart verjüngend ausgebildet, dass in der Transportlage die erste vertikale Höhe eine maximale Höhe ist und die Turmsektion nur in einem an die erste vertikale Höhe in Richtung der Längsachse angrenzenden Bereich elastische verformt wird gemäß Schritt B). Die Erfinder erkannten dabei vorteilhaft, dass es in diesem Fall ausreichend ist, nur den an den Bereich der maximalen vertikalen Höhe angrenzenden Bereich elastisch zu verformen. Dieser Bereich reicht insbesondere so weit, dass die in diesem Bereich auftretende vertikale Höhe die zulässige maximale Transporthöhe übersteigt. Ist aufgrund nationaler Vorgaben beispielsweise nur eine maximal zulässige Transporthöhe in vertikaler Richtung von 4,3 m zulässig, wird der gesamte Bereich der Turmsektion entlang der Längsachse bis zu der Stelle verformt, ab welcher die vertikale Höhe im entspannten, unbelasteten Zustand in der Transportlage die zulässige Transporthöhe von 4,3 m nicht übersteigt.

Gemäß dem Oberbegriff des Anspruchs 1, wird die Verformungskraft durch mindestens eine Spannvorrichtung, welche mit einer Anzahl korrespondierender Lasteinleitungselemente der Turmsektion gekoppelt ist, in die Wandung der Turmsektion eingeleitet. Somit kann durch die Verwendung von Lasteinleitungselementen die Sicherheit und Wiederholbarkeit der Verfahrensschritte erhöht werden.

Erfindungsgemäß weist die Spannvorrichtung ferner eine Anzahl von Zugstangen mit je zwei endseitigen Kopplungsabschnitten auf, die an jedem ihrer Kopplungsabschnitte mit einem korrespondierenden Lasteinleitungselement der Turmsektion gekoppelt sind, wobei die Verformungskraft mittels der Zugstangen in die Lasteinleitungselemente und die Wandung eingeleitet wird, und/oder die Spannvorrichtung weist eine Spanneinrichtung, etwa in Form eines oder mehrere Spanngurte oder Spannseile auf, die mit mindestens zwei Lasteinleitungselementen der Turmsektion gekoppelt ist, wobei die Verformungskraft zum elastisches Verformen mittels des Spanngurtes in die Lasteinleitungselemente und die Wandung eingeleitet wird. Sowohl die Zugstangen als auch die Spanneinrichtung stellen dabei zweckmäßige und gut handhabbare Mittel zum Einleiten einer Verformungskraft und Spannen der Turmsektion bereit. Derartige Spannvorrichtungen können dabei vorzugsweise jeweils nur mit einem Abschnitt der Turmsektion und den dort angeordneten Lasteinleitungselementen gekoppelt sein, sodass die Verformungskraft gleichmäßig entlang der Längsrichtung in die Wandung der Turmsektion eingeleitet werden kann. Mehrere Spannvorrichtungen können dabei vorzugsweise auch miteinander gekoppelt werden und kumuliert Verformungskräfte in die Turmsektion einleiten.

Vorzugsweise wird die Verformungskraft zum elastischen Verformen zumindest eines Abschnittes der Turmsektion orthogonal zur Längsrichtung mittels der Spannvorrichtung in Lasteinleitungselemente, die als angeschweißte Bleche und/oder Bolzenanordnungen mit Bolzen ausgebildet sind, eingeleitet. Angeschweißte Bleche und/oder Bolzenanordnungen stellen dabei zweckmäßige und gut handhabbare Lasteinleitungselemente dar, wobei z.B. die Bolzen der Bolzenanordnungen zur Vermeidung von Kerbspannungen bzw. zu dessen Reduzierung auch nach dem Transport in der Turmsektion verbleiben können. Die Bolzen können dabei in bekannter Weise durch Sicherungselemente in der Turmsektion gegen ein ungewolltes Lösen gesichert werden und beispielsweise mit Montageschnittstellen wie Bohrungen oder dergleichen zusammenwirken.

Weiter vorzugsweise weist die Spannvorrichtung einen motorisch betätigbaren Seil- oder Kettenzug oder einer Seilwinde auf, der dazu eingerichtet ist, die Verformungskraft in die korrespondierenden Lasteinleitungselemente einzuleiten und/oder die Verformungskraft zur Entlastung der elastisch verformten Turmsektion kontrolliert aufzunehmen. Die Verformungskraft wird also von der Spannvorrichtung mittels des motorisch betätigbaren Seil- oder Kettenzugs oder eine Seilwinde in die korrespondierenden Lasteinleitungselemente eingeleitet. Ein motorisch betätigbarer Seil- oder Kettenzug bzw. eine Seilwinde ermöglicht dabei eine gut handhabbare und mechanisch optimierte Vorrichtung zur Krafteinleitung dar.

Gemäß einer bevorzugten Ausführungsform umfasst das Verfahren ferner das Anordnen und/oder Befestigen von Versteifungselementen in der Turmsektion zum Versteifen der Turmsektion in vertikaler Richtung, wobei die Versteifungselemente bevorzugt vor dem elastischen Verformen in der Turmsektion angeordnet werden. Derartige Versteifungselemente sichern die Turmsektion gegen eine ungewollte plastische Verformung während des Transports aufgrund von transportbedingten Belastungen, wie beispielsweise Stoßlasten.

Vorzugsweise weist die Wandung eine Wandstärke auf, die zwischen 10 und 70 mm beträgt, wobei die Höhe zwischen 4350 und 4850 mm beträgt, und die elastische Deformation des Abschnittes der Turmsektion durch einen Deformationskoeffizienten $K_{\Delta h}$ gekennzeichnet ist, welcher sich aus der einzuhaltenden Transporthöhe in Transportlage, dem Werkstoff und dem Verhältnis der verformungsbedingten Änderung der in der Transportlage vertikalen Höhe ($\Delta h$) und der Wandstärke (t) ergibt. Der Deformationskoeffizient liegt für erfindungsgemäße Turmsektionen beispielsweise für beruhigten unlegierten Stahl S355 und einer einzuhaltenden Transporthöhe von 4,3 m in einem Bereich von 1,0 bis 55, besonders bevorzugt in einem Bereich von 1,1 bis 53. Der Deformationskoeffizienten $K_{\Delta h}$ berechnet sich somit erfindungsgemäß nach Formel (1):

$$K_{\Delta h} = \frac{h_1 - h_2}{t} = \frac{\Delta h}{t} \qquad\qquad (1)$$

In einem zweiten Aspekt betrifft die Erfindung gemäß Anspruch 11, eine Turmsektion für eine Windenergieanlage, die dazu eingerichtet ist, in einer vorbestimmten Transportlage transportiert zu werden, wobei die Turmsektion in der Transportlage eine sich in horizontaler Richtung erstreckende Längsachse und eine sich entlang der Längsachse erstreckende Wandung aufweist, wobei die Turmsektion dazu eingerichtet ist, in einem unbelasteten Zustand in der Transportlage eine erste vertikale Höhe einzunehmen.

Gemäß Anspruch 11, weist die Turmsektion eine Anzahl von in Richtung der Längsachse beabstandet zueinander angeordneten Lasteinleitungselementen auf, die mit einer Spannvorrichtung koppelbar sind, um eine Verformungskraft zum elastisches Verformen zumindest eines Abschnittes der Turmsektion derart auf die Wandung aufzubringen, dass die Turmsektion in einem elastisch verformten Zustand in der Transportlage eine zweite vertikale Höhe einnimmt, die kleiner als die erste vertikale Höhe ist, und um die Turmsektion in dem elastisch verformten Zustand zu fixieren. Eine solche Turmsektion macht sich die in Bezug auf den ersten Aspekt der Erfindung beschriebenen Vorteile zu eigen. Bevorzugte Ausführungsformen des ersten Aspekts sind zugleich bevorzugte Ausführungsformen des zweiten Aspekts und umgekehrt.

Gemäß einer bevorzugten Ausführungsform weist die Turmsektion einen runden, ovalen oder polygonalen Querschnitt mit einem Flächenmittelpunkt auf, wobei mindestens zwei Lasteinleitungselemente einander gegenüberliegend innenliegend an der Wandung befestigt und dazu eingerichtet sind, jeweils paarweise mittels der Spannvorrichtung miteinander gekoppelt zu werden, um die Verformungskraft in Richtung des Flächenmittelpunktes in die Wandung einzuleiten. Alternativ oder zusätzlich sind die Lasteinleitungselemente derart an der Wandung angeordnet sind, dass die Verformungskraft exzentrisch, also in einer beabstandet zu dem Flächenmittelpunkt verlaufenden Richtung, in die Wandung eingeleitet wird.

Ein runder, ovaler oder polygonaler mit einem Flächenmittelpunkt hat den Vorteil, dass durch die Vermeidung scharfer Kanten bzw. generell der Vermeidung von Kanten Kerbspannungen reduziert und die Ausfallsicherheit und Tragfähigkeit der Turmsektion erhöht wird. Insbesondere kann sich dabei die auf die Wandung wirkende Kraft besser auf die gesamte Wandung verteilen, welche sich in Richtung der Längsachse um den Querschnitt herum erstreckt. Im Sinne der Erfindung kann der Querschnitt entlang der Längsachse dabei sowohl konstant, als auch veränderlich ausgebildet sein. Auch können die beschriebenen Querschnitte der Turmsektionen entlang der gesamten Längsachse oder aber nur abschnittsweise vorliegen und beispielsweise miteinander kombiniert werden. Vorzugsweise ist die Wandung dabei geschlossen ausgebildet.

Vorzugsweise umfasst die Wandung einen Stahlwerkstoff, insbesondere einen hochfesten Stahlwerkstoff, wobei der Stahlwerkstoff vorzugsweise durch Spannungsarmglühen wärmebehandelt wurde.

Vorzugsweise umfasst die Wandung zwei Kantenbereiche mit jeweils einer in Längsrichtung verlaufenden Kante aufweist, wobei die zwei Kanten in Umfangsrichtung beabstandet zueinander und dazu eingerichtet sind, beim elastischen Verformen der Turmsektion aneinander vorbeigeführt werden, sodass die Kantenbereiche im elastisch verformten Zustand der Turmsektion einander überlappen.

Eine weitere, nicht erfindungsgemäße Ausführungsform betrifft eine Transportvorrichtung zum Halten und Transportieren einer Turmsektion in einer Transportlage, insbesondere einer Turmsektion gemäß dem zweiten Aspekt der Erfindung, wobei die Turmsektion in der Transportlage eine sich in horizontaler Richtung erstreckende Längsachse und eine sich entlang der Längsachse erstreckende Wandung aufweist, und ein erstes Schwenklager und ein zweites Schwenklager zum Bereitstellen jeweils einer Auflagefläche für eine Wandung der Turmsektion aufweist, wobei das erste und zweite Schwenklager dazu eingerichtet sind, die Turmsektion in der Transportlage in einem unbelasteten Zustand zu halten, in welcher die Turmsektion eine erste vertikale Höhe einnimmt, und in einem elastisch verformten Zustand, in welcher die Turmsektion eine zweite vertikale Höhe einnimmt, die kleiner als die erste vertikale Höhe ist.

In einem weiteren Aspekt betrifft die Erfindung gemäß Anspruch 14, ein Verfahren zur Errichtung einer Windenergieanlage an einem Errichtungsort.

Die Erfindung löst die eingangs genannte Aufgabe in Bezug auf das Verfahren zur Errichtung einer Windenergieanlage an einem Errichtungsort, dadurch, dass das Verfahren die Schritte umfasst:

- Bereitstellen einer in einem elastisch verformten Zustand arretierten Turmsektion nach einer der vorstehend beschriebenen bevorzugten Ausführungsformen,
- Entspannen der Turmsektion am Errichtungsort, sodass diese einen unbelasteten Zustand mit einer in der Transportlage ersten vertikalen Höhe einnimmt,
- Bereitstellen eines Anschlussflansches am Errichtungsort,

- Befestigen des Anschlussflansches an einem endseitigen Abschnitt der Turmsektion, insbesondere mittels einer Laschenverbindung,
- Aufrichten der Turmsektion derart, dass die Längsrichtung im Wesentlichen vertikal verläuft und der Anschlussflansch an dem bodenseitigen Ende der Turmsektion angeordnet ist,
- Verbinden der Turmsektion mittels des Anschlussflansches mit einem im Boden des Errichtungsorts eingelassenen Fundament, insbesondere einem Fundamentkorb.

Erfindungsgemäß erfolgt das Bereitstellen der Turmsektion am Errichtungsort mittels eines Verfahrens gemäß dem ersten Aspekt der Erfindung.

Die Erfindung wird im Folgenden unter Bezugnahme auf die beigefügten Figuren anhand bevorzugter Ausführungsbeispiele beschrieben. Hierbei zeigen:

Fig. 1:      eine Windenergieanlage gemäß einem bevorzugten Ausführungsbeispiel;

Fig. 2a:     eine perspektivische Ansicht einer Turmsektion in einem elastisch verformten Zustand gemäß einer ersten Ausführungsform;

Fig. 2b:     die Turmsektion gemäß Fig. 2a in einer Seitenansicht;

Fig. 3a:     eine perspektivische Ansicht einer Turmsektion einer Windenergieanlage in einem elastisch verformten Zustand gemäß einer zweiten bevorzugten Ausführungsform;

Fig. 3b:     die Turmsektion gemäß Fig. 3a in einer Seitenansicht;

Fig. 4a:     eine perspektivische Ansicht einer Turmsektion einer Windenergieanlage in einem elastisch verformten Zustand gemäß einer dritten Ausführungsform;

Fig. 4b:     die Turmsektion gemäß Fig. 4a in einer Seitenansicht, wobei die Einleitung der Verformungskraft gemäß einer bevorzugten Ausführungsform erfolgt;

Fig. 4c:     die Turmsektion gemäß Fig. 4a in einer Seitenansicht, wobei die Einleitung der Verformungskraft gemäß einer weiteren bevorzugten Ausführungsform erfolgt;

Fig. 5:      eine Turmsektion mit Montageschnittstellen für Lasteinleitungselemente gemäß einer ersten bevorzugten Ausführungsform;

Fig. 6:      ein Ausschnitt der Turmsektion gemäß Fig. 5 mit einem montierten Lasteinleitungselement;

Fig. 7:      eine Turmsektion mit Lasteinleitungselementen gemäß einer zweiten bevorzugten Ausführungsform;

Fig. 8:      die Turmsektion gemäß Fig. 7 mit einer Spannvorrichtung;

Fig. 9:      ein Anschlussflansch zur Montage an einer Turmsektion;

Fig. 10:     eine Transportvorrichtung, die nicht Gegenstand der Erfindung ist, zum Transportieren einer Turmsektion in einer ersten bevorzugten Ausführungsform; und

Fig. 11:     eine Transportvorrichtung, die nicht Gegenstand der Erfindung ist, zum Transportieren einer Turmsektion gemäß einer zweiten bevorzugten Ausführungsform.

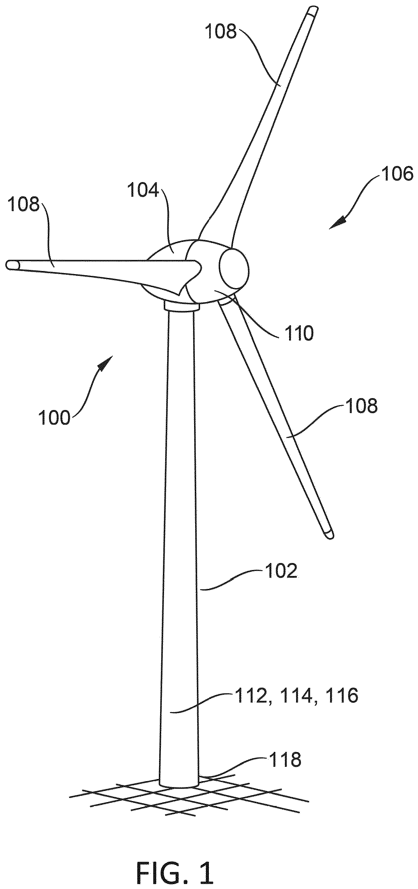

Fig. 1 zeigt eine an einem Errichtungsort errichtete Windenergieanlage 100 mit einem Turm 102, auf dem eine Gondel 104 gelagert ist. An der Gondel 104 ist eine Rotoranordnung 106 drehbar gelagert. Die Rotoranordnung 106 weist eine Rotornabe 110 und Rotorblätter 108 auf. Die Rotoranordnung 106 treibt einen Generator (nicht gezeigt) zur Erzeugung von elektrischem Strom an.

Der Turm 102 der Windenergieanlage 100 umfasst eine Turmsektion 112, 114, 116 und einen Anschlussflansch 118 (in Fig. 1 nur angedeutet), der an dem bodenseitigen Ende der Turmsektion angeordnet und dazu eingerichtet, die Turmsektion mit einem im Boden des Errichtungsorts eingelassenen Fundament bzw. einem Fundamentkorb zu verbinden.

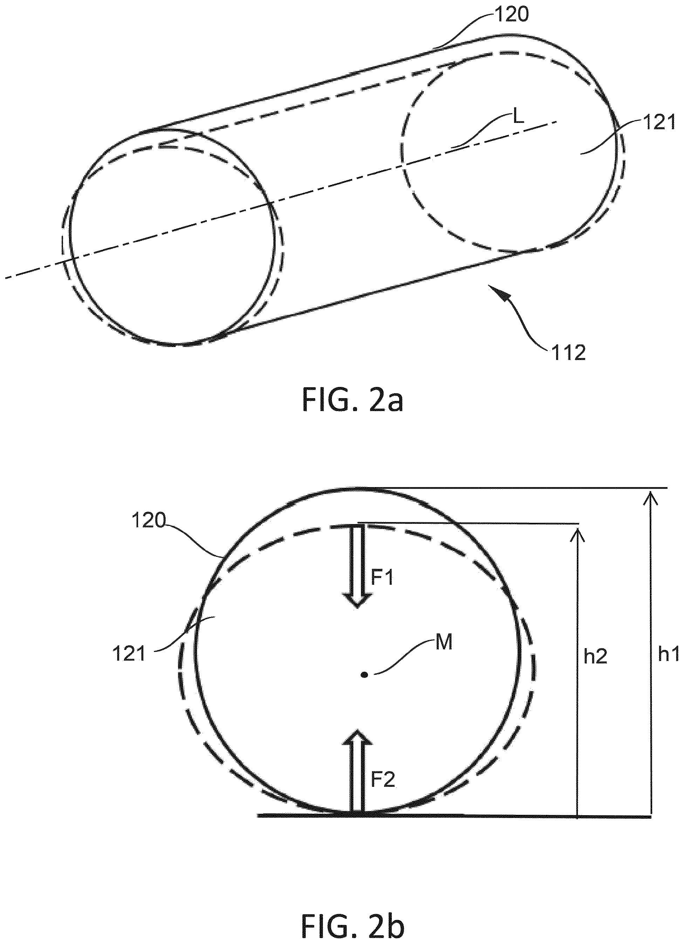

Die Figuren 2a und b zeigen eine Turmsektion 112 gemäß einer ersten bevorzugten Ausführungsform. Wie in den Figuren angedeutet, wird die Turmsektion 112 durch ein erfindungsgemäßes Verfahren gemäß einer ersten bevorzugten Ausführungsform durch Aufbringen von Verformungskräften $F_1$, $F_2$ elastisch verformt ist.

Die Turmsektion 112 weist eine Wandung 120 und Längsachse L auf, wobei sich die Wandung 120 entlang der Längsachse L erstreckt. Die Wandung 120 bildet dabei die Mantelfläche der zylindrisch ausgebildeten Turmsektion 112.

Die Figuren 2a und 2b zeigen die Turmsektion 112 in einer Transportlage, in welcher die Längsachse L sich im Wesentlichen in horizontaler Richtung erstreckt. Wie insbesondere Fig. 2b zeigt, weist die Turmsektion 112 in der Transportlage im entspannten Zustand eine vertikale Höhe $h_1$ auf. Die vertikale Höhe $h_1$ ist gemäß dem gezeigten Ausführungsbeispiel der Turmsektion 112 in Längsrichtung L konstant.

In der vorliegenden Ausführungsform weist die Turmsektion 112 einen runden Querschnitt 121 mit einem Flächenmittelpunkt M auf, wobei der Querschnitt 121 entlang der Längsachse L konstant ist.

Wie die Fig. 2b zeigt, werden zur elastischen Verformung mindestens eines Abschnittes der Turmsektion 112 die Verformungskräfte $F_1$, $F_2$ auf die Wandung 120 derart aufgebracht, dass die Turmsektion 112 in einem elastisch verformten Zustand in der gezeigten Transportlage eine zweite Höhe $h_2$ einnimmt (angedeutet durch die gestrichelten Linien), die kleiner als die erste vertikale Höhe $h_1$ ist. Die Verformungskräfte $F_1$, $F_2$ werden dabei orthogonal zur Längsrichtung L aufgebracht, wobei die Wirkrichtung in Richtung des Flächenmittelpunktes M verläuft, sodass sich der Querschnitt 121 der Turmsektion 112 im Wesentlichen oval verformt wird. Die Verformungskräfte $F_1$ und $F_2$ sind vorzugsweise betragsmäßig gleichgroß und entgegengesetzt gerichtet.

Die Verformungskräfte $F_1$, $F_2$ werden auf die in Fig. 2b gezeigte Weise entlang der Längsachse L insbesondere gleichmäßig und vorzugsweise in regelmäßigen Abständen auf die Wandung 120 aufgebracht, sodass eine gleichmäßige elastische Verformung der Turmsektion 112 entlang der Längsachse L erfolgt.

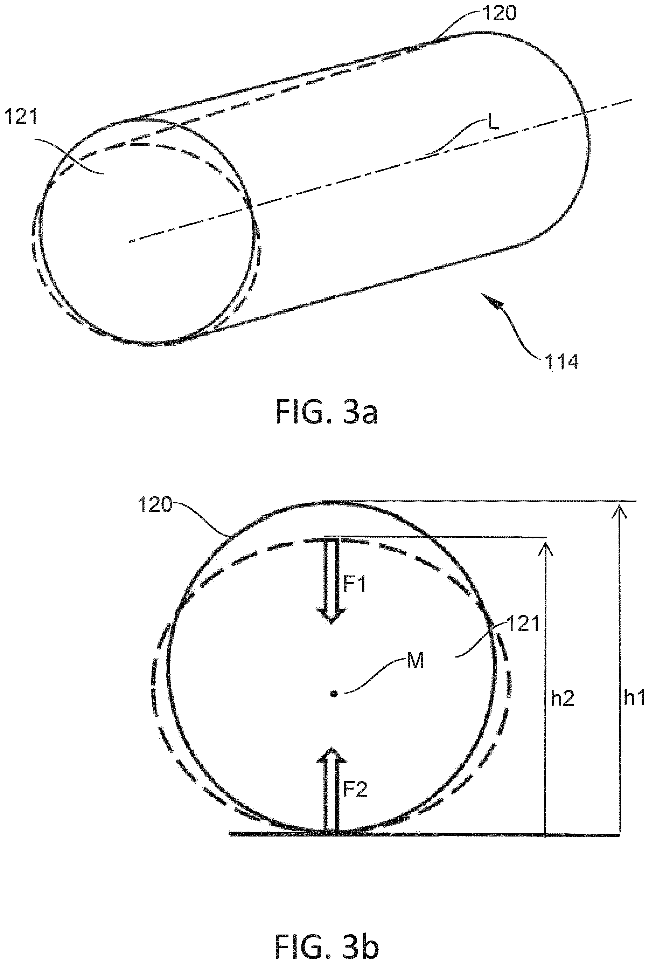

Die Figuren 3a und 3b zeigen eine Turmsektion 114, die mittels eines erfindungsgemäßen Verfahrens gemäß einer zweiten vorzugsweisen Ausführungsform elastisch verformt wurde.

Die Turmsektion 114 weist eine sich entlang der Längsachse L erstreckende Wandung 120 sowie einen Querschnitt 121 auf und ist abschnittsweise derart verjüngend ausgebildet, dass in der gezeigten Transportlage die Höhe $h_1$ eine maximale Höhe ist, von der ausgehend die vertikale Höhe in Richtung der Längsachse L abnimmt.

Zur elastischen Verformung der Turmsektion 114 werden Verformungskräfte $F_1$, $F_2$ lokal begrenzt in einem Bereich auf die Wandung 120 aufgebracht, welcher in Richtung der Längsachse L an die maximale Höhe $h_1$ angrenzt. Die Turmsektionen 114 verformt sich somit nur in dem an den Bereich der maximalen Höhe $h_1$ angrenzenden Bereich elastisch, wobei sich die vertikale Höhe $h_1$ auf eine zweite vertikale Höhe $h_2$ reduziert.

Im Übrigen erfolgt die elastische Verformung entsprechend dem ersten Ausführungsbeispiel vorzugsweise durch entgegengesetzt wirkende betragsmäßig gleichgroße Verformungskräfte $F_1$, $F_2$, deren Wirkrichtung in Richtung des Flächenmittelpunktes M verläuft. Der gezeigte Querschnitt 121 ist vorliegend rund, kann aber jede beliebige Form annehmen, wobei eine runde, ovale oder polygonale Querschnittsfläche zu bevorzugen ist.

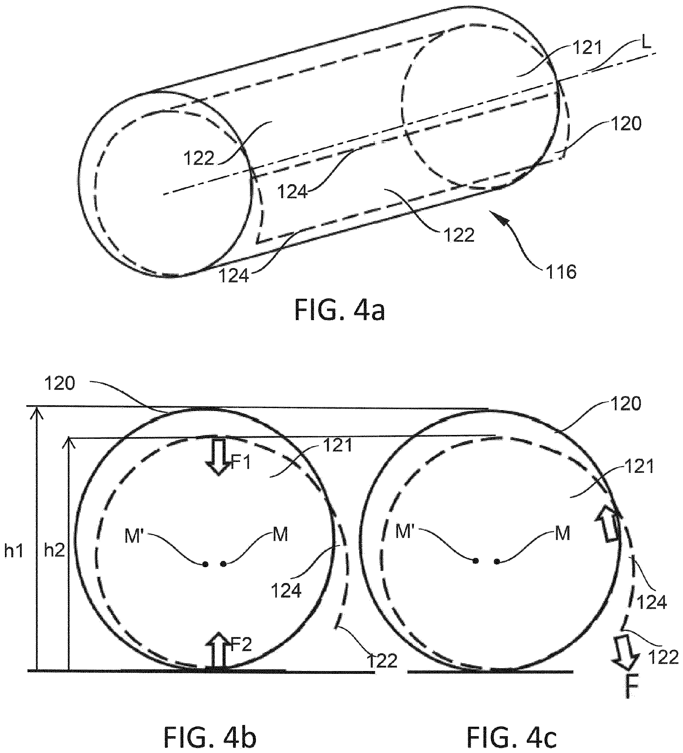

Die Figuren 4a bis 4c zeigen die elastische Verformung einer erfindungsgemäßen Turmsektion 116 durch ein erfindungsgemäßes Verfahren gemäß einer dritten bevorzugten Ausführungsform.

Die Turmsektion 116 ist in Figur 4a in einer Transportlage gezeigt, in welcher die Turmsektion 116 eine sich in horizontaler Richtung erstreckende Längsachse L, eine vertikale Höhe und eine sich entlang der Längsachse erstreckende Wandung 120 aufweist. Die Turmsektion 116 weist eine im unbelasteten Zustand in der Transportlage konstante maximale Höhe $h_1$ auf. Weiterhin weist die Turmsektion orthogonal zur Längsrichtung L einen Querschnitt 121 mit einem Flächenmittelpunkt M auf.

Die Wandung 120 weist zwei Kantenbereiche 122 mit jeweils einer in Längsrichtung L verlaufenden Kante 124 auf, die in Umfangsrichtung beabstandet zueinander verlaufen.

Wie in den Figuren 4a bis 4c angedeutet, werden in der gezeigten Ausführungsform des erfindungsgemäßen Verfahrens die Kanten 124 zum elastischen Verformen der Turmsektion 116 aneinander vorbeigeführt, sodass die Kantenbereiche 122 im elastisch verformten Zustand der Turmsektion 116 aneinander überlappen.

Zum elastischen Verformen der Turmsektion 116 werden dazu gemäß den in Figur 4b gezeigten Ausführungsbeispiel die Verformungskräfte $F_1$, $F_2$, welche vorzugsweise betragsmäßig gleichgroß und entgegengesetzt gerichtet sind, derart auf die Wandung 120 aufgebracht, dass deren Wirkrichtung in Richtung des Flächenmittelpunktes M des Querschnitts 121 verläuft. Durch die elastische Verformung der Turmsektion 116 kommt es dabei zu einer Verschiebung des Flächenmittelpunktes M, wobei die Kräfte $F_1$, $F_2$ der Verschiebung des Flächenmittelpunktes M folgen, sodass deren Wirkrichtung auch weiterhin zumindest näherungsweise in Richtung des verschobenen Flächenmittelpunktes M' verläuft.

Der in Fig. 4c gezeigte Verformen der Turmsektion 116 unterscheidet sich von der in Fig. 4b gezeigten Ausführungsform dadurch, dass eine Verformungskraft F exzentrisch, also mit einer zu dem Flächenmittelpunkt M beabstandeten Wirkrichtung im Kantenbereich 122 auf die Wandung 120 aufgebracht. Dies hat den Vorteil, dass verglichen mit der in Fig. 4b gezeigten Ausführungsform eine reduzierte Verformungskraft F zum elastischen Verformen der Turmsektion 116 genügt.

Die Wandung 120 wird gemäß Fig. 4b und 4c dabei derart verformt, dass sie sich in der Seitenansicht spiralförmig bzw. schneckenförmig eindreht.

Wird eine Turmsektion 116 gemäß der Figuren 4a bis 4c bereitgestellt, ist zum Errichten der Windenergieanlage 100 gemäß Fig. 1 vor dem Befestigen der Turmsektion 116 an dem Anschlussflansch 118 ferner das Fügen der Kanten 124 aneinander entlang der gesamten Längsachse L der Turmsektion 116 erforderlich.

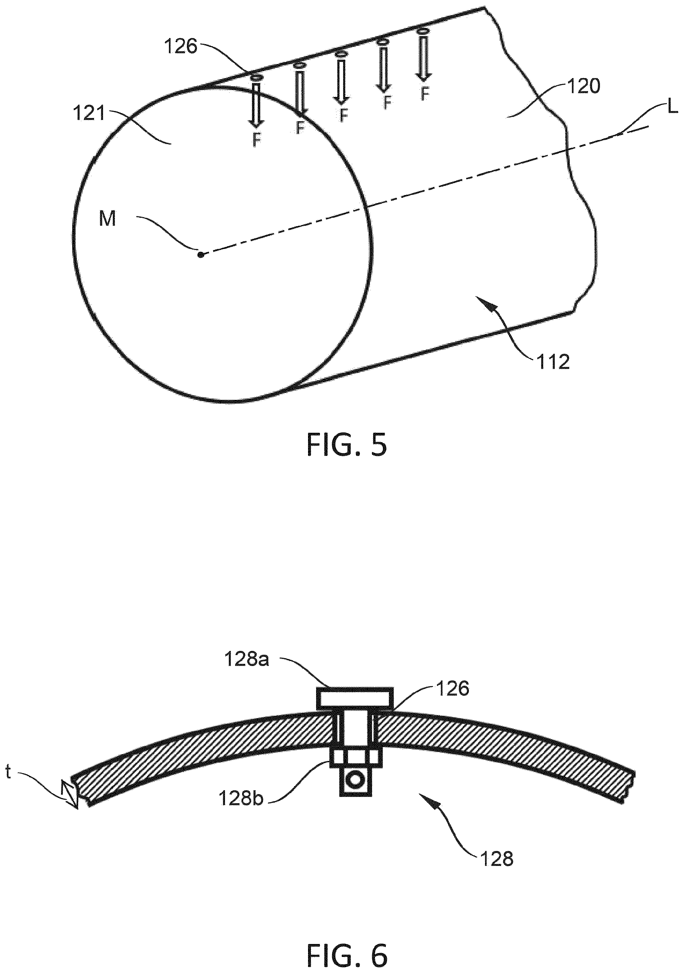

Fig. 5 zeigt die Turmsektion 112 in einem unbelasteten Zustand. Die Turmsektion 112 weist eine Anzahl von in Längsrichtung L in der Wandung 120 beabstandet zueinander angeordneten Montageschnittstellen 126 auf. Die Montageschnittstellen 126 sind dazu eingerichtet, mit korrespondierenden Lasteinleitungselementen 128, 129 (vgl. Fig. 6, 7 und 8) zum Aufbringen einer Verformungskraft F auf die Wandung 120 gekoppelt zu werden. Die Montageschnittstellen 126 sind als Bohrungen ausgebildet und in der Transportlage im Bereich der maximalen vertikalen Höhe der Turmsektion 112 angeordnet.

Fig. 6 zeigt ein beispielhaftes Lasteinleitungselement in Form einer Bolzenanordnung 128, die eine Anzahl von Bolzen 128a und eine Anzahl korrespondierender Sicherungselemente 128b zum Sichern der Bolzen 128a umfasst. Wie insbesondere Fig. 5 zeigt, sind die Bolzen 128a jeweils mit einer als Bohrung in der Wandung 120 ausgebildeten Montageschnittstelle 126 in Eingriff. Der Bolzen 128a wird dabei jeweils durch das Sicherungselement 128b in der als Bohrung 126 gesichert. Das Sicherungselement 128b ist als Mutter ausgebildet.

Der Abstand in Längsrichtung L zwischen den einzelnen Lasteinleitungselementen 128a und damit auch den korrespondierenden Montageschnittstellen 126 ist abhängig von der Wandstärke t sowie der maximalen Höhe $h_1$ der Turmsektion 112.

Beispielsweise sind bei einer durch die Verformungskraft F induzierten Spannung von nicht mehr als 300 N/m$^2$, einer Wandstärke t von 60 mm und einer elastischen Verformung durch Aufbringen einer Verformungskraft F in Richtung des Flächenmittelpunktes M vorzugsweise 13 Lasteinleitungselemente pro Meter an der Wandung 120 befestigt, welche insbesondere gleichmäßig verteilt sind.

Die Lasteinleitungselemente 128a können vorzugsweise mittels Zugstangen oder einem Gurt bzw. Seil miteinander zum Aufbringen der elastischen Verformungskraft gekoppelt werden. Die aufzubringende Verformungskraft F richtet sich dabei nach der Wandstärke t der Wandung 120 sowie der Fließgrenze bzw. der 0,2%-Dehngrenze des jeweils genutzten Werkstoffes, welchen die Wandung zumindest teilweise umfasst.

Nach dem Entspannen bzw. Entlasten der Turmsektion 112 nach dem Transport am Errichtungsort verbleiben die Lasteinleitungselemente 128a vorzugsweise in den Montageschnittstellen 126, um die Schwächung der Turmsektion 112 in Folge der Kerbspannungen zu reduzieren.

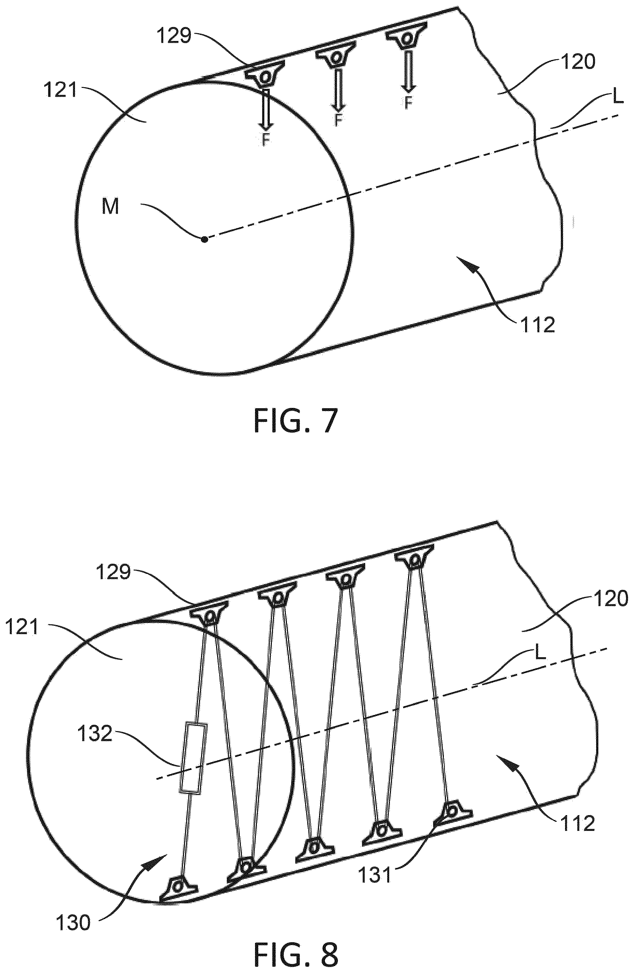

Die Figuren 7 und 8 zeigen eine Turmsektion 112 mit Lasteinleitungselementen 129 gemäß einem zweiten bevorzugten Ausführungsbeispiel.

Das Ausführungsbeispiel unterscheidet sich von dem in Fig. 6 gezeigten Ausführungsbeispiel dadurch, dass die Lasteinleitungselemente 129 ohne zusätzliche Montageschnittstelle an die Innenseite der Wandung 120 thermisch gefügt, vorzugsweise angeschweißt, sind. Die Lasteinleitungselemente 129 sind als Bleche bzw. Platten mit einer im Wesentlichen in Richtung der Längsachse L verlaufenden Kante ausgebildet, welche thermisch an die innere Wandung 120 gefügt wird. Die Lasteinleitungselemente 129 weisen Ausnehmungen 131 auf, die vorzugsweise zylindrisch ausgebildet sind und mit welcher Spannvorrichtungen in Eingriff bringbar sind, um eine Verformungskraft F auf die Wandung 120 aufzubringen.

Wie insbesondere Fig. 8 zeigt, sind die Ausnehmungen 131 mit einer Spannvorrichtung, die ein Spannseil 130 und einen in der Figur 8 nur angedeuteten Ketten- bzw. Seilzug 132 umfasst, koppelbar.

Das Spannseil 130 ist dazu eingerichtet, jedes der in Längsrichtung L beabstandet und im Wesentlichen in einer Reihe aufgereihten Lasteinleitungselemente 129 mit mindestens einem korrespondierenden und an der gegenüberliegenden Wandung in Längsrichtung L beabstandet und im Wesentlichen reihenförmig angeordneten Lasteinleitungselemente 129 zu koppeln. Vorzugsweise ist jeweils ein erstes Lasteinleitungselement 129 mittels des Spannseils 130 mit nur einem gegenüberliegenden Lasteinleitungselement 129 gekoppelt, wobei die folgenden Lasteinleitungselemente 129 jeweils mit zwei Lasteinleitungselementen 129 an der gegenüberliegenden Wandung gekoppelt sind, sodass das Spannseil 130 zwischen den gegenüberliegenden Abschnitten der Wandung 120 gespannt und wechselseitig mit jeweils einem Lasteinleitungselement 129 in Eingriff ist. Das letzte Lasteinleitungselement in einem randseitigen Abschnitt der Turmsektion 112 ist mit nur einem gegenüberliegenden Lasteinleitungselement 129 gekoppelt und dazu eingerichtet, das Spannseil 130 derart zu führen, dass es mit dem 132 Ketten- bzw. Seilzug in Eingriff kommt, um eine Verformungskraft F auf jedes der Lasteinleitungselemente 129 aufzubringen. Das spätere Entlasten bzw. Entspannen der Turmsektion am Errichtungsort erfolgt vorzugsweise kontrolliert mittels eines solchen Ketten- oder Seilzuges.

Vorzugsweise umfasst die Turmsektion 112 eine Mehrzahl von Spannvorrichtungen, die vorzugsweise ein Spannseil 130oder Spanngurt aufweisen und jeweils abschnittsweise mit einem Teil der verfügbaren Lasteinleitungselemente 129 in Eingriff bringbar sind, um eine Verformungskraft F auf die Wandung 120 aufzubringen. Somit werden mehrere Spannvorrichtungen genutzt, um eine gleichmäßigere Einleitung der Verformungskraft F in die jeweils mit dieser gekoppelten Lasteinleitungselemente 129 zu ermöglichen. Selbiges gilt im Übrigen auch für die in Fig. 6 gezeigte Ausführungsform.

Die in den Figuren 6 bis 8 gezeigten Lasteinleitungselemente 128, 129 können auch an anderer Position an der Wandung 120 befestigt sein, um beispielsweise eine exzentrische Krafteinleitung zum elastischen Verformen der Turmsektion 112 zu ermöglichen (vgl. Fig. 4a und 4c).

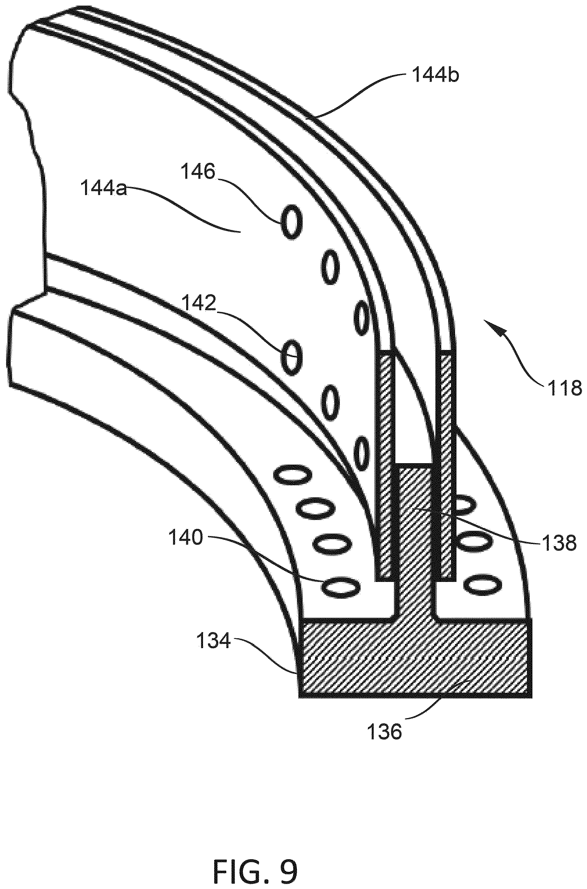

Fig. 9 zeigt eine perspektivische Darstellung eines Anschlussflansches 118 in einer teilgeschnittenen Ansicht. Der Anschlussflansch 118 weist einen T-förmigen Querschnitt 134 auf und umfasst eine Bodenplatte 136 und einen Steg 138. Im Bereich der Bodenplatte 136 sind bodenseitige Bohrungen 140 angeordnet. Die bodenseitigen Bohrungen 140 sind dazu eingerichtet, den Anschlussflansch 118 mit einem Fundament bzw. einem Fundamentkorb am Errichtungsort zu verbinden. Der Steg 138 ist im Verhältnis zur Bodenplatte 136 vorzugsweise schmaler ausgebildet, wobei die Dicke des Steges 138 vorzugsweise an die Wandstärke t (vgl. Fig. 6) der jeweiligen Stahlturmsektion 112, 114, 116 angepasst ist.

Der Anschlussflansch 118 weist im Bereich des Steges 138 ferner eine Anzahl von turmseitigen Bohrungen 142 auf, die beabstandet zueinander entlang des Umfangs des Anschlussflansches 118 verteilt angeordnet sind. Die turmseitigen Bohrungen 142 sind dazu eingerichtet, mit zwei Leitblechen bzw. Leitplatten 144a, b in Eingriff gebracht zu werden. Das erste Leitblech 144a ist an einer innenliegenden Wandung des Stegs 138 angeordnet und überlappt den Steg bereichsweise, sodass der Steg 138 mittels der turmseitigen Bohrungen 142 und der korrespondierenden Bohrungen des Leitblechs 144a in Eingriff kommt. Auf der abgewandten, außenliegenden Seite des Steges 138 ist das zweite Leitblech 144b angeordnet und überlappt den Steg 138 dabei bereichsweise derart, dass die Bohrungen des Leitblechs 144b deckungsgleich mit den korrespondierenden turmseitigen Bohrungen 142 des Steges 138 sind und mit diesen mittels Bolzen- oder Schraubverbindungen in Eingriff gebracht werden können. Dabei sind die Leitbleche 144a, b derart parallel zueinander angeordnet, dass sich ein Spalt zwischen ihnen ausbildet, welcher eine Dicke aufweist, die im Wesentlichen der Wandstärke t (vgl. Fig. 6) der Turmsektion 112, 114, 116 entspricht. Zur Montage der Turmsektion 112, 114, 116 (nicht gezeigt, vgl. Fig. 2a-8) an dem Anschlussflansch 118 kann ein endseitiger Abschnitt der Turmsektion 112, 114, 116 in den zwischen den Leitblechen 144a, b gebildeten Spalt eingeführt und Mittels einer Bolzen- oder Schraubverbindung mit den oberen Anschlussbohrungen 146 der Leitbleche 144a, b verbunden werden. Die Turmsektion 112, 114, 116 kann dabei derart in dem Spalt angeordnet werden, dass die Anschlussbohrungen (nicht gezeigt) am endseitigen Abschnitt der Turmsektion 112, 114, 116 und die Anschlussbohrungen 146 der Leitbleche 144a, b deckungsgleich sind. Anschließend können Bolzen oder Schrauben durch die Anschlussbohrungen 146 geführt werden, um den Anschlussflansch 118 mit der Turmsektion 112, 114, 116 durch eine kombinierte Bolzen- und Klemmverbindung zu verbinden.

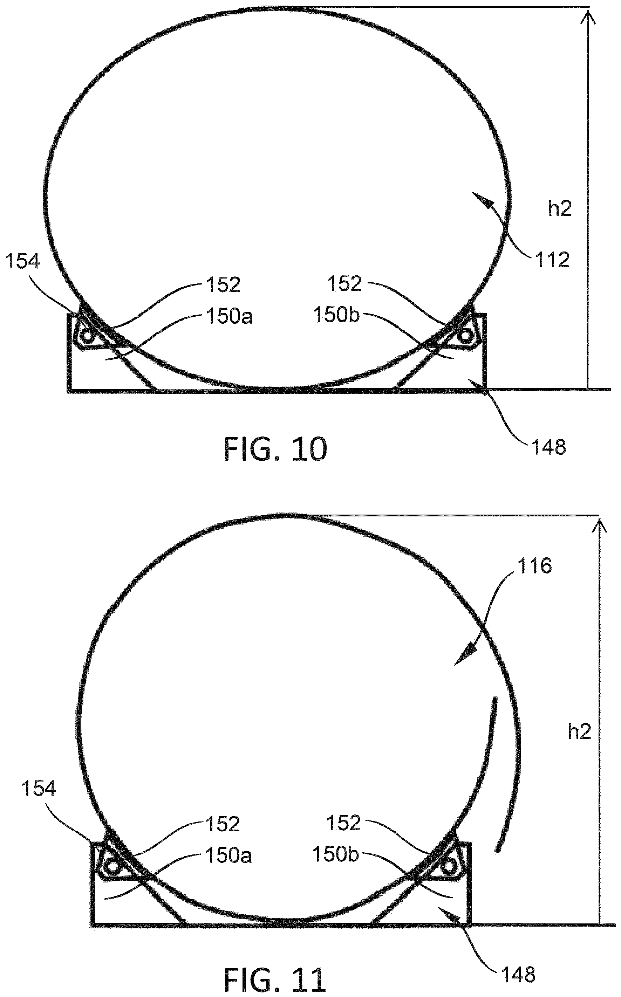

Die Figuren 10 und 11 zeigen eine Transportvorrichtung 148, die nicht Gegenstand der Erfindung ist und welche in Fig. 10 eine Turmsektion 112 gemäß einer ersten bevorzugten Ausführungsform und in Fig. 11 eine Turmsektion 116 gemäß einer dritten bevorzugten Ausführungsform in einer Transportlage hält. Die Turmsektionen 112, 116 werden in den Figuren 10 und 11 in der Transportlage in einem elastisch verformten Zustand gehalten, in welchem sie die vertikale Richtung der Höhe $h_2$ einnimmt, die kleiner ist als die Höhe $h_1$ in einem entspannten Zustand der jeweiligen Turmsektion 112, 116.

Die Transportvorrichtung 148 weist dafür ein erstes und ein zweites Schwenklager 150a, b auf, die dazu eingerichtet sind, jeweils eine Auflagefläche 152 für einen Abschnitt der Wandung 120 der Turmsektion 112, 116 bereitzustellen. Die Auflageflächen 152 kommen dabei insbesondere flächig mit der Wandung 120 in Kontakt.

Durch die zwei Schwenklager 150a, b können die Auflageflächen 152 bedarfsgerecht um einen Drehpunkt 154 der Schwenklager verschwenkt werden, sodass die jeweiligen Turmsektionen 112, 116 sowohl in einem entspannten, unbelasteten Zustand, als auch in einem elastisch verformten Zustand in der Transportlage gehalten werden können.

Bezugszeichenliste

| | |
|---|---|
| 100 | Windenergieanlage |
| 102 | Turm |
| 104 | Gondel |
| 106 | Rotoranordnung |
| 108 | Rotorblätter |
| 110 | Rotornabe |
| 112, 114, 116 | Turmsektion |
| 118 | Anschlussflansch |
| 120 | Wandung |
| 121 | Querschnitt |
| 122 | Kantenbereiche |
| 124 | Kante |
| 126 | Montageschnittstelle |
| 128 | Bolzenanordnung |

| | |
|---|---|
| 128a | Bolzen, |
| 128b | Sicherungselement |
| 129 | Bleche |
| 130 | Spannvorrichtung, Spannseil |
| 131 | Ausnehmungen |
| 132 | Seilwinde, Kettenzug |
| 134 | T-förmiger Querschnitt |
| 136 | Bodenplatte |
| 138 | Steg |
| 140 | bodenseitige Bohrungen |
| 142 | Turmseitige Bohrungen |
| 144a, b | Leitbleche |
| 146 | Anschlussbohrungen |
| 148 | Transportvorrichtung |
| 150a, b | erste und zweite Schwenklager |
| 152 | Auflagefläche |
| 154 | Drehpunkt |
| F, $F_1$, $F_2$ | Verformungskraft |
| L | Längsachse |
| $h_1$ | erste vertikale Höhe |
| $h_2$ | zweite vertikale Höhe |
| M | Flächenmittelpunkt |

**Patentansprüche**

1. Verfahren zum Transport einer Turmsektion (112, 114, 116) einer Windenergieanlage (100), umfassend Schritte:

A) Bereitstellen einer Turmsektion (112, 114, 116), die dazu eingerichtet ist, in einer vorbestimmten Transportlage transportiert zu werden, wobei die Turmsektion (112, 114, 116) in der Transportlage eine sich in horizontaler Richtung erstreckende Längsachse (L) und eine sich entlang der Längsachse (L) erstreckende Wandung (120) aufweist,
wobei die Turmsektion (112, 114, 116) dazu eingerichtet ist, in einem unbelasteten Zustand in der Transportlage eine erste vertikale Höhe ($h_1$) einzunehmen,
B) Aufbringen einer Verformungskraft (F, $F_1$, $F_2$) auf die Wandung (120) zum elastischen Verformen zumindest eines Abschnittes der Turmsektion (112, 114, 116) derart, dass die Turmsektion (112, 114, 116) in einem elastisch verformten Zustand in der Transportlage eine zweite vertikale Höhe ($h_2$) einnimmt, die kleiner als die erste vertikale Höhe ($h_1$), und
C) Arretieren der Turmsektion (112, 114, 116) in dem elastisch verformten Zustand,
wobei die Verformungskraft (F, $F_1$, $F_2$) durch mindestens eine Spannvorrichtung (130, 132), welche mit einer Anzahl korrespondierender Lasteinleitungselemente (128, 129) der Turmsektion (112, 114, 116) gekoppelt ist, in die Wandung (120) der Turmsektion (112, 114, 116) eingeleitet wird, und
**dadurch gekennzeichnet, dass** die Spannvorrichtung (130, 132) eine Anzahl von Zugstangen mit jeweils zwei endseitigen Kopplungsabschnitten aufweist, die an jedem ihrer Kopplungsabschnitte mit einem korrespondierenden Lasteinleitungselement (128, 129) der Turmsektion (112, 114, 116) gekoppelt sind, wobei die Verformungskraft (F, $F_1$, $F_2$) zum elastisches Verformen mittels der Zugstangen in die Lasteinleitungselemente und die Wandung (120) eingeleitet wird, und/oder
die Spannvorrichtung einen Spanngurt bzw. ein Spannseil (130) aufweist, das mit mindestens zwei Lasteinleitungselementen (128, 129) der Turmsektion (112, 114, 116) gekoppelt ist, wobei die Verformungskraft (F, $F_1$, $F_2$) zum elastisches Verformen mittels des Spannseils (130) in die Lasteinleitungselemente (128, 129) und die Wandung (120) eingeleitet wird.

2. Verfahren nach Anspruch 1, ferner umfassend die Schritte:

D) Bereitstellen einer Transportvorrichtung (148) zum Halten und Transportieren der Turmsektion (112, 114, 116) in der Transportlage, und/oder
E) Verbringen der Turmsektion (112, 114, 116) auf die Transportvorrichtung (148) in der Transportlage,
wobei vorzugsweise der Schritt bzw. die Schritte D) und/oder E) vor Schritt B) erfolgen, sodass die Verformungskraft (F, $F_1$, $F_2$) in der Transportlage auf die Wandung (120) aufgebracht wird.

3. Verfahren nach einem der vorstehenden Ansprüche,

wobei die Wandung (120) einen fließfähigen Werkstoff umfasst und die mittels der Verformungskraft (F, $F_1$, $F_2$) in der Turmsektion (112, 114, 116) induzierte Spannung kleiner ist, als die 0,2% Dehngrenze und/oder die Elastizitätsgrenze des Werkstoffs,
wobei vorzugsweise die mittels der Verformungskraft (F, $F_1$, $F_2$) in der Turmsektion (112, 114, 116) induzierte Spannung in einem Bereich von 40% bis 95% der Fließgrenze oder der 0,2% Dehngrenze liegt, weiter vorzugsweise in einem Bereich von 50% bis 90% der Fließgrenze oder der 0,2%-Dehngrenze des Werkstoffs liegt.

4. Verfahren nach einem der vorstehenden Ansprüche,
wobei die Turmsektion (112, 114, 116) einen symmetrischen, insbesondere runden, ovalen oder polygonalen Querschnitt (121) mit einem Flächenmittelpunkt (M) aufweist und die Verformungskraft (F, $F_1$, $F_2$) in Richtung des Flächenmittelpunktes (M) in die Wandung (120) der Turmsektion (112, 114, 116) eingeleitet wird.

5. Verfahren nach einem der Ansprüche 1 bis 3,

wobei die Wandung (120) zwei Kantenbereiche (122) mit jeweils einer in Längsrichtung (L) verlaufenden Kante (124) aufweist, die in Umfangsrichtung beabstandet zueinander sind, und
wobei die Kanten (124) beim elastischen Verformen der Turmsektion (116) aneinander vorbeigeführt werden, sodass die Kantenbereiche (122) im elastisch verformten Zustand der Turmsektion (116) einander überlappen.

6. Verfahren nach einem der vorstehenden Ansprüche,
wobei die Turmsektion (112, 116) einen entlang der Längsachse (L) konstanten, insbesondere einen runden, ovalen oder polygonalen, Querschnitt (121) aufweist und vollständig entlang ihrer Längsachse (L) elastisch verformt wird gemäß Schritt B).

7. Verfahren nach einem der vorstehenden Ansprüche,
wobei die Turmsektion (114) zumindest abschnittsweise derart verjüngend ausgebildet ist, dass in der Transportlage die Höhe $h_1$ eine maximale Höhe ist und die Turmsektion (114) nur in einem an die Höhe $h_1$ in Richtung der Längsachse (L) angrenzenden Bereich elastische verformt wird gemäß Schritt B).

8. Verfahren nach einem der vorstehenden Ansprüche, wobei

die Verformungskraft (F, $F_1$, $F_2$) zum elastisches Verformen zumindest eines Abschnittes der Turmsektion (112, 114, 116) orthogonal zur Längsrichtung (L) mittels der Spannvorrichtung (130, 132) in Lasteinleitungselemente (128, 129) eingeleitet wird, die vorzugsweise als angeschweißte Bleche (129) und/oder Bolzenanordnungen (128) ausgebildet sind; und/oder
die Verformungskraft (F, $F_1$, $F_2$) von der Spannvorrichtung (130, 132) mittels eines motorisch betätigbaren Seil- oder Kettenzug oder eine Seilwinde (132) in die korrespondierenden Lasteinleitungselemente (128, 129) eingeleitet wird.

9. Verfahren nach einem der vorstehenden Ansprüche,
wobei das Verfahren ferner das Anordnen und/oder Befestigen von Versteifungselementen in der Turmsektion (112, 114, 116) zum Versteifen der Turmsektion (112, 114, 116) in vertikaler Richtung umfasst, und wobei die Versteifungselemente vorzugsweise vor dem elastischen Verformen in der Turmsektion (112, 114, 116) angeordnet werden.

10. Verfahren nach einem der vorstehenden Ansprüche,

wobei die Wandung (120) eine Wandstärke (t) aufweist, die zwischen 10 und 70 mm beträgt, und die Höhe $h_1$ zwischen 4350 und 4850 mm beträgt, und
wobei die elastische Deformation des Abschnittes der Turmsektion (112, 114, 116) durch einen Deformationskoeffizienten $K_{\Delta h}$ gekennzeichnet ist, welcher sich aus dem Verhältnis der der Änderung der in der Transportlage vertikalen Höhe ($\Delta h$) durch die elastische Verformung und der Wandstärke (t) ergibt, und der Deformationskoeffizient in einem Bereich von 1,0 bis 55 liegt, besonders vorzugsweise in einem Bereich von 1,1 bis 53.

11. Turmsektion (112, 114, 116) für eine Windenergieanlage (100),

die dazu eingerichtet ist, in einer vorbestimmten Transportlage transportiert zu werden, wobei die Turmsektion (112, 114, 116) in der Transportlage eine sich in horizontaler Richtung erstreckende Längsachse (L) und eine sich entlang der Längsachse (L) erstreckende Wandung (120) aufweist,

wobei die Turmsektion (112, 114, 116) dazu eingerichtet ist, in einem unbelasteten Zustand in der Transportlage eine erste vertikale Höhe ($h_1$) einzunehmen,

wobei die Turmsektion (112, 114, 116) eine Anzahl von in Richtung der Längsachse (L) beabstandet zueinander angeordneten Lasteinleitungselementen (128, 129) aufweist, die mit einer Spannvorrichtung (130, 132) koppelbar sind, um eine Verformungskraft ($F$, $F_1$, $F_2$) zum elastisches Verformen zumindest eines Abschnittes der Turmsektion (112, 114, 116) derart auf die Wandung (120) aufzubringen, dass die Turmsektion (112, 114, 116) in einem elastisch verformten Zustand in der Transportlage eine zweite vertikale Höhe ($h_2$) einnimmt, die kleiner als die erste vertikale Höhe ($h_1$) ist, und um die Turmsektion (112, 114, 116) in dem elastisch verformten Zustand zu fixieren,

wobei die Verformungskraft ($F$, $F_1$, $F_2$) durch mindestens eine Spannvorrichtung (130, 132), welche mit einer Anzahl korrespondierender Lasteinleitungselemente (128, 129) der Turmsektion (112, 114, 116) gekoppelt ist, in die Wandung (120) der Turmsektion (112, 114, 116) eingeleitet wird,

**dadurch gekennzeichnet, dass** die Spannvorrichtung eine Anzahl von Zugstangen mit jeweils zwei endseitigen Kopplungsabschnitten aufweist, die an jedem ihrer Kopplungsabschnitte mit einem korrespondierenden Lasteinleitungselement (128, 129) der Turmsektion (112, 114, 116) gekoppelt sind,

wobei die Verformungskraft ($F$, $F_1$, $F_2$) zum elastisches Verformen mittels der Zugstangen in die Lasteinleitungselemente und die Wandung (120) eingeleitet wird, und/oder

die Spannvorrichtung einen Spanngurt bzw. ein Spannseil (130) aufweist, das mit mindestens zwei Lasteinleitungselementen (128, 129) der Turmsektion (112, 114, 116) gekoppelt ist,

wobei die Verformungskraft ($F$, $F_1$, $F_2$) zum elastisches Verformen mittels des Spannseils (130) in die Lasteinleitungselemente (128, 129) und die Wandung (120) eingeleitet wird.

12. Turmsektion (112, 114, 116) für eine Windenergieanlage (100) nach Anspruch 11,

wobei die Turmsektion (112, 114, 116) einen runden, ovalen oder polygonalen Querschnitt (121) mit einem Flächenmittelpunkt (M) aufweist, und

- mindestens zwei Lasteinleitungselemente (128, 129) einander gegenüberliegend innenliegend an der Wandung (120) befestigt und dazu eingerichtet sind, jeweils paarweise mittels der Spannvorrichtung (130, 132) miteinander gekoppelt zu werden, um die Verformungskraft ($F$, $F_1$, $F_2$) in Richtung des Flächenmittelpunktes (M) in die Wandung (120) einzuleiten, oder
- die Lasteinleitungselemente (128, 129) derart an der Wandung (120) angeordnet sind, dass die Verformungskraft ($F$) exzentrisch, also in einer beabstandet zu dem Flächenmittelpunkt (M) verlaufenden Richtung, in die Wandung (120) eingeleitet wird, und/oder wobei die Wandung (120) einen Stahlwerkstoff umfasst, insbesondere einen hochfesten Stahlwerkstoff, und der Stahlwerkstoff vorzugsweise durch Spannungsarmglühen wärmebehandelt wurde.

13. Turmsektion (116) für eine Windenergieanlage (100) nach einem der Ansprüche 11 oder 12,

wobei die die Wandung (120) zwei Kantenbereiche (122) mit jeweils einer in Längsrichtung (L) verlaufenden Kante (124) aufweist, die in Umfangsrichtung beabstandet zueinander sind, und

wobei die Kanten (124) dazu eingerichtet sind, beim elastischen Verformen der Turmsektion (116) aneinander vorbeigeführt werden, sodass die Kantenbereiche (122) im elastisch verformten Zustand der Turmsektion (116) einander überlappen.

14. Verfahren zur Errichtung einer Windenergieanlage an einem Errichtungsort,

- Bereitstellen einer in einem elastisch verformten Zustand arretierten Turmsektion (112, 114, 116) nach einem der Ansprüche 11 bis 13,
- Entspannen der Turmsektion (112, 114, 116) am Errichtungsort, sodass diese einen unbelasteten Zustand mit einer in der Transportlage vertikalen Höhe ($h_1$) einnimmt,
- Bereitstellen eines Anschlussflansches (118) am Errichtungsort,
- Befestigen des Anschlussflansches (118) an einem endseitigen Abschnitt der Turmsektion (112, 114, 116), insbesondere mittels Laschenverbindungen,
- Aufrichten der Turmsektion (112, 114, 116) derart, dass die Längsrichtung (L) im Wesentlichen vertikal verläuft und der Anschlussflansch (118) an dem bodenseitigen Ende der Turmsektion (112, 114, 116) angeordnet ist,

- Verbinden der Turmsektion (112, 114, 116) mittels des Anschlussflansches (118) mit einem im Boden des Errichtungsorts eingelassenen Fundament, insbesondere einem Fundamentkorb,

wobei das Bereitstellen der Turmsektion (112, 114, 116) am Errichtungsort mittels eines Verfahrens nach einem der Ansprüche 1 bis 10 erfolgt.

**Claims**

1. A method for transporting a tower section (112, 114, 116) of a wind turbine (100), comprising the steps of:

   A) providing a tower section (112, 114, 116) which is adapted to be transported in a predetermined transport position, wherein the tower section (112, 114, 116) when in the transport position has a longitudinal axis (L) extending in the horizontal direction and a wall (120) extending along the longitudinal axis (L), wherein the tower section (112, 114, 116) is adapted to adopt a first vertical height ($h_1$) when in an unstressed state in the transport position,
   B) applying a deformation force (F, $F_1$, $F_2$) to the wall (120) so as to elastically deform at least one portion of the tower section (112, 114, 116) in such a way that the tower section (112, 114, 116) adopts a second vertical height ($h_2$) that is smaller than the first vertical height ($h_1$) when in an elastically deformed state in the transport position, and
   C) locking the tower section (112, 114, 116) in the elastically deformed state, wherein the deformation force (F, $F_1$, $F_2$) is introduced into the wall (120) of the tower section (112, 114, 116) by at least one tensioning system (130, 132) which is coupled to a number of corresponding load introducing elements (128, 129) of the tower section (112, 114, 116),
   **characterized in that** the tensioning system has a number of pull rods each having two coupling sections at their ends and which are coupled at each of their coupling sections to a corresponding load introducing element (128, 129) of the tower section (112, 114, 116), wherein the deformation force (F, $F_1$, $F_2$) for elastic deformation is introduced into the load introducing elements and the wall (120) by means of the pull rods, and/or the tensioning system has a tensioning strap or tensioning cable (130) that is coupled to at least two load introducing elements (128, 129) of the tower section (112, 114, 116), wherein the deformation force (F, $F_1$, $F_2$) for elastic deformation is introduced into the load introducing elements (128, 129) and the wall (120) by means of the tensioning cable (130).

2. The method according to claim 1, further comprising the steps of:

   D) providing a transportation system (148) for retaining and transporting the tower section (112, 114, 116) in the transport position, and/or
   E) moving the tower section (112, 114, 116) onto the transportation system (148) in the transport position, wherein the step or steps D) and/or E) are preferably carried out before step B), such that the deformation force (F, $F_1$, $F_2$) is applied to the wall (120) in the transport position.

3. The method according to any one of the preceding claims,

   wherein the wall (120) includes a flowable material and the stress induced in the tower section (112, 114, 116) by means of the deformation force (F, $F_1$, $F_2$) is less than the 0.2% proof stress and/or the elastic limit of the material, wherein the stress induced in the tower section (112, 114, 116) by means of the deformation force (F, $F_1$, $F_2$) is preferably within a range from 40% to 95% of the yield point or the 0.2% proof stress, further preferably within a range from 50% to 90% of the yield point or the 0.2% proof stress of the material.

4. The method according to any one of the preceding claims, wherein the tower section (112, 114, 116) has a symmetrical, in particular round, oval or polygonal cross-section (121) with an area centre (M), and the deformation force (F, $F_1$, $F_2$) is introduced into the wall (120) of the tower section (112, 114, 116) in the direction of the area centre (M).

5. The method according to any one of claims 1 to 3,

   wherein the wall (120) has two edge regions (122) each having an edge (124) extending in a longitudinal direction (L) and which are spaced apart from each other in the circumferential direction, and

wherein the edges (124) are guided past each other when the tower section (116) is elastically deformed, such that the edge regions (122) overlap each other when the tower section (116) is in the elastically deformed state.

**6.** The method according to any one of the preceding claims,

wherein the tower section (112, 116) has a constant cross-section along the longitudinal axis (L), in particular a round, oval or polygonal cross-section (121) and is elastically deformed along its longitudinal axis (L) in accordance with step B).

**7.** The method according to any one of the preceding claims,

wherein the tower section (114) tapers at least in portions thereof in such a way that height $h_1$ is a maximum height in the transport position and the tower section (114) is elastically deformed in accordance with step (B) only in a region adjacent to height $h_1$ in the direction of the longitudinal axis (L).

**8.** The method according to any one of the preceding claims,

wherein the deformation force ($F$, $F_1$, $F_2$) for elastic deformation of at least one portion of the tower section (112, 114, 116) is introduced orthogonally to the longitudinal direction (L) by means of the tensioning system (130, 132) into load introducing elements (128, 129) which are preferably designed as welded-on plates (129) and/or as bolt arrangements (128), and/or

wherein the deformation force ($F$, $F_1$, $F_2$) is introduced by the tensioning system into the corresponding load introducing elements (128, 129) by means of a motor-driven cable pull or chain hoist or cable winch (132).

**9.** The method according to any one of the preceding claims,

wherein the method further comprises the step of arranging and/or fixing stiffening members in the tower section (112, 114, 116) in order to brace the tower section (112, 114, 116) in the vertical direction, and wherein the stiffening members are preferably arranged in the tower section (112, 114, 116) before elastic deformation.

**10.** The method according to any one of the preceding claims,

wherein the wall (120) has a wall thickness (t) of between 10 and 70 mm and height $h_1$ is between 4350 and 4850 mm, and

wherein the elastic deformation of the section of the tower section (112, 114, 116) is **characterised by** a coefficient of deformation $K_{\Delta h}$ that is the ratio of the change in vertical height ($\Delta h$) in the transport position as a result of the elastic deformation to the wall thickness (t), and the coefficient of deformation is in a range from 1.0 to 55, particularly preferably in a range from 1.1 to 53.

**11.** A tower section (112, 114, 116) for a wind turbine (100),

which is adapted to be transported in a predetermined transport position, wherein the tower section (112, 114, 116) when in the transport position has a longitudinal axis (L) extending in the horizontal direction and a wall (120) extending along the longitudinal axis (L),

wherein the tower section (112, 114, 116) is adapted to adopt a first vertical height ($h_1$) when in an unstressed state in the transport position,

wherein the tower section (112, 114, 116) has a number of load introducing elements (128, 129) which are arranged spaced apart from each other in the direction of the longitudinal axis (L) and which can be coupled to a tensioning system (130, 132) in order to apply a deformation force ($F$, $F_1$, $F_2$) to the wall (120) so as to elastically deform at least a portion of the tower section (112, 114, 116) in such a way that the tower section (112, 114, 116) adopts a second vertical height ($h_2$) that is smaller than the first vertical height ($h_1$) when in an elastically deformed state in the transport position, and in order to fix the tower section (112, 114, 116) in the elastically deformed state,

wherein the deformation force ($F$, $F_1$, $F_2$) is introduced into the wall (120) of the tower section (112, 114, 116) by at least one tensioning system (130, 132) which is coupled to a number of corresponding load introducing elements (128, 129) of the tower section (112, 114, 116),

**characterized in that** the tensioning system has a number of pull rods each having two coupling sections at their ends and which are coupled at each of their coupling sections to a corresponding load introducing element (128, 129) of the tower section (112, 114, 116), wherein the deformation force ($F$, $F_1$, $F_2$) for elastic deformation is introduced into the load introducing elements and the wall (120) by means of the pull rods, and/or

the tensioning system has a tensioning strap or tensioning cable (130) that is coupled to at least two load introducing elements (128, 129) of the tower section (112, 114, 116),

wherein the deformation force (F, $F_1$, $F_2$) for elastic deformation is introduced into the load introducing elements (128, 129) and the wall (120) by means of the tensioning cable (130).

12. The tower section (112, 114, 116) for a wind turbine (100) according to claim 11,
wherein the tower section (112, 114, 116) has a round, oval or polygonal cross-section (121) having an area centre (M), and

- at least two load introducing elements (128, 129) are fixed to the inner side of the wall (120) opposite one another and are adapted to be coupled to each other in pairs by means of the tensioning system (130, 132) in order to introduce the deformation force (F, $F_1$, $F_2$) into the wall (120) in the direction of the area centre (M), or
- the load introducing elements (128, 129) are arranged on the wall (120) in such a way that the deformation force (F) is introduced into the wall (120) eccentrically, that is, in a direction extending at a distance from the area centre (M), and/or wherein the wall (120) includes a steel material, in particular a high-strength steel material, and the steel material has preferably been heat-treated by stress-relief annealing

13. The tower section (116) for a wind turbine (100) according to any one of claims 11 or 12,

wherein the wall (120) has two edge regions (122) each having an edge (124) extending in a longitudinal direction (L) and which are spaced apart from each other in the circumferential direction, and
wherein the edges (124) are designed to be guided past each other during elastic deformation of the tower section (116), such that the edge regions (122) overlap each other when the tower section (116) is in the elastically deformed state.

14. A method for installing a wind turbine at an installation site, comprising the steps of:

- providing a tower section (112, 114, 116) according to any one of claims 11 to 13 locked in an elastically deformed state,
- relaxing the tower section (112, 114, 116) at the installation site, so that it adopts an unstressed state with a vertical height of ($h_1$) in the transport position,
- providing a connector flange (118) at the installation site,
- fixing the connector flange (118) to an end portion of the tower section (112, 114, 116), in particular by means of fish plate connections,
- erecting the tower section (112, 114, 116) in such a way that the longitudinal direction (L) is substantially vertical and the connector flange (118) is arranged at the bottom end of the tower section (112, 114, 116),
- joining the tower section (112, 114, 116) by means of the connector flange (118) to a foundation embedded in the ground of the installation site, in particular to a foundation basket,

wherein the tower section (112, 114, 116) is provided at the installation site by a method according to any one of claims 1 to 10.

**Revendications**

1. Procédé de transport d'une section de tour (112, 114, 116) d'une éolienne (100), comprenant les étapes :

A) de mise à disposition d'une section de tour (112, 114, 116) qui est mise au point à cet effet pour être transportée dans une position de transport prédéfinie, dans lequel la section de tour (112, 114, 116) présente, dans la position de transport ; un axe longitudinal (L) s'étendant dans la direction horizontale et une paroi (120) s'étendant le long de l'axe longitudinal (L), dans lequel la section de tour (112, 114, 116) est mise au point pour adopter une première hauteur verticale ($h_1$) dans la position de transport à l'état non chargé,
B) d'application d'une force de déformation (F, $F_1$, $F_2$) sur la paroi (120) pour la déformation élastique d'au moins une partie de la section de tour (112, 114, 116) de telle manière que la section de tour (112, 114, 116) adopte une deuxième hauteur verticale ($h_2$) dans la position de transport dans un état déformé élastiquement, qui est inférieure à la première hauteur verticale ($h_1$), et
C) de maintien de la section de tour (112, 114, 116) dans l'état élastiquement déformé, dans lequel la force de déformation (F, $F_1$, $F_2$) est introduite dans la paroi (120) de la section de tour (112, 114, 116) par au moins un dispositif de serrage (130, 132), qui est couplé à un nombre correspondant d'éléments d'application de charge (128, 129) correspondants de la section de tour (112, 114, 116), et

**caractérisé en ce que** le dispositif de serrage (130, 132) présente un nombre de tiges de traction avec respectivement deux sections de couplage côté extrémité, qui sont couplées sur chacune de leurs parties de couplage à un élément d'application de charge (128, 129) correspondant de la section de tour (112, 114, 116), dans lequel la force de déformation ($F$, $F_1$, $F_2$) est appliquée dans les éléments d'application de charge et la paroi (120) pour la déformation élastique au moyen des tiges de traction, et/ou

le dispositif de serrage présente une sangle de serrage ou un câble de serrage (130), qui est couplé(e) à au moins deux éléments d'application de charge (128, 129) de la section de tour (112, 114, 116), dans lequel la force de déformation ($F$, $F_1$, $F_2$) est appliquée dans les éléments d'application de charge (128, 129) et la paroi (120) pour la déformation élastique au moyen du câble de serrage (130).

2. Procédé selon la revendication 1, comprenant en outre les étapes :

   D) de mise à disposition d'un dispositif de transport (148) pour maintenir et transporter la section de tour (112, 114, 116) dans la position de transport, et/ou

   E) d'amenée de la section de tour (112, 114, 116) sur le dispositif de transport (148) dans la position de transport, dans lequel de préférence l'étape ou les étapes D) et/ou E) sont effectuées avant l'étape B) si bien que la force de déformation ($F$, $F_1$, $F_2$) est appliquée sur la paroi (120) dans la position de transport.

3. Procédé selon l'une quelconque des revendications précédentes,

   dans lequel la paroi (120) comprend un matériau fluide et la contrainte induite au moyen de la force de déformation ($F$, $F_1$, $F_2$) dans la section de tour (112, 114, 116) est inférieure à la limite d'allongement de 0,2 % et/ou à la limite d'élasticité du matériau,

   dans lequel de préférence la contrainte induite au moyen de la force de déformation ($F$, $F_1$, $F_2$) dans la section de tour (112, 114, 116) se situe dans une plage de 40 % à 95 % de la limite d'écoulement ou de la limite d'allongement de 0,2 %, se situe en outre de préférence dans une plage de 50 % à 90 % de la limite d'écoulement ou de la limite d'allongement de 0,2 % du matériau.

4. Procédé selon l'une quelconque des revendications précédentes, dans lequel la section de tour (112, 114, 116) présente une section transversale (121) symétrique, en particulier ronde, ovale ou polygonale avec un centre de surface (M) et la force de déformation ($F$, $F_1$, $F_2$) est appliquée dans la direction du centre de surface (M) dans la paroi (120) de la section de tour (112, 114, 116).

5. Procédé selon l'une quelconque des revendications 1 à 3,

   dans lequel la paroi (120) présente deux zones de bord (122) avec respectivement un bord (124) s'étendant dans la direction longitudinale (L), qui sont espacées l'une de l'autre en direction périphérique, et

   dans lequel les bords (124) sont guidés le long l'un de l'autre lors de la déformation élastique de la section de tour (116) si bien que les zones de bord (122) se chevauchent dans l'état élastiquement déformé de la section de tour (116).

6. Procédé selon l'une quelconque des revendications précédentes, dans lequel la section de tour (112, 116) présente une section transversale (121) constante le long de l'axe longitudinal (L), en particulier ronde, ovale ou polygonale, et est entièrement déformée élastiquement le long de son axe longitudinal (L) selon l'étape B).

7. Procédé selon l'une quelconque des revendications précédentes, dans lequel la section de tour (114) est réalisée au moins par endroits de manière à se rétrécir de telle manière que, dans la position de transport, la hauteur $h_1$ est une hauteur maximale et la section de tour (114) est déformée élastiquement selon l'étape B seulement dans une zone adjacente à la hauteur $h_1$ dans la direction de l'axe longitudinal (L).

8. Procédé selon l'une quelconque des revendications précédentes, dans lequel

   la force de déformation ($F$, $F_1$, $F_2$) pour la déformation élastique d'au moins une partie de la section de tour (112, 114, 116) est appliquée orthogonalement par rapport à la direction longitudinale (L) au moyen du dispositif de serrage (130, 132) dans des éléments d'application de charge (128, 129), qui sont de préférence réalisés en tant que tôles (129) soudées et/ou en tant qu'ensembles de boulons (128) ; et/ou

la force de déformation (F, $F_1$, $F_2$) est appliquée par le dispositif de serrage (130, 132) au moyen d'un palan à câble ou à chaîne pouvant être actionné de manière motorisée ou d'un treuil à câble (132) dans les éléments d'application de charge (128, 129) correspondants.

9. Procédé selon l'une quelconque des revendications précédentes,
dans lequel le procédé comprend en outre la disposition et/ou la fixation d'éléments de renforcement dans la section de tour (112, 114, 116) pour renforcer la section de tour (112, 114, 116) dans une direction verticale, et dans lequel les éléments de renforcement sont disposés de préférence avant la déformation élastique dans la section de tour (112, 114, 116).

10. Procédé selon l'une quelconque des revendications précédentes,

dans lequel la paroi (120) présente une épaisseur de paroi (t) qui est comprise entre 10 et 70 mm et la hauteur $h_1$ est comprise entre 4350 et 4850 mm, et

dans lequel la déformation élastique de la partie de la section de tour (112, 114, 116) est **caractérisée par** un coefficient de déformation $K_{\Delta h}$, qui résulte du rapport entre la modification de la hauteur verticale ($\Delta h$) dans la position de transport par la déformation élastique et l'épaisseur de paroi (t), et le coefficient de déformation se situe dans une plage de 1,0 à 55, en particulier de préférence dans une plage de 1,1 à 53.

11. Section de tour (112, 114, 116) pour une éolienne (100),

qui est mise au point pour être transportée dans une position de transport prédéfinie, dans laquelle la section de tour (112, 114, 116) présente, dans la position de transport, un axe longitudinal (L) s'étendant dans la direction horizontale et une paroi (120) s'étendant le long de l'axe longitudinal (L),
dans laquelle la section de tour (112, 114, 116) est mise au point pour adopter une première hauteur verticale ($h_1$) dans un état non chargé dans la position de transport, dans laquelle la section de tour (112, 114, 116) présente un nombre d'éléments d'application de charge (128, 129) disposés de manière espacée les uns par rapport aux autres dans la direction de l'axe longitudinal (L), qui peuvent être couplés à un dispositif de serrage (130, 132) pour appliquer une force de déformation (F, $F_1$, $F_2$) pour la déformation élastique d'au moins une partie de la section de tour (112, 114, 116) sur la paroi (120) de telle manière que la section de tour (112, 114, 116), dans un état élastiquement déformé, adopte, dans la position de transport, une deuxième hauteur verticale ($h_2$) qui est inférieure à la première hauteur verticale ($h_1$) et pour bloquer la section de tour (112, 114, 116) dans l'état élastiquement déformé, dans laquelle la force de déformation (F, $F_1$, $F_2$) est appliquée dans la paroi (120) de la section de tour (112, 114, 116) par au moins un dispositif de serrage (130, 132), qui est couplé à un nombre d'éléments d'application de charge (128, 129) correspondants de la section de tour (112, 114, 116),
**caractérisée en ce que** le dispositif de serrage présente un nombre de tiges de traction avec respectivement deux parties de couplage côté extrémité, qui sont couplées sur chacune de leurs parties de couplage à un élément d'application de charge (128, 129) correspondant de la section de tour (112, 114, 116),
dans laquelle la force de déformation (F, $F_1$, $F_2$) pour la déformation élastique est appliquée au moyen des tiges de traction dans les éléments d'application de charge et la paroi (120), et/ou
le dispositif de serrage présente une sangle de serrage ou un câble de serrage (130), qui est couplé à au moins deux éléments d'application de charge (128, 129) de la section de tour (112, 114, 116),
dans laquelle la force de déformation (F, $F_1$, $F_2$) pour la déformation élastique est introduite au moyen du câble de serrage (130) dans les éléments d'application de charge (128, 129) et la paroi (120).

12. Section de tour (112, 114, 116) pour une éolienne (100) selon la revendication 11,
dans laquelle la section de tour (112, 114, 116) présente une section transversale (121) ronde, ovale ou polygonale avec un centre de surface (M), et

- au moins deux éléments d'application de charge (128, 129) sont fixés l'un en face de l'autre à l'intérieur sur la paroi (120) et sont mis au point pour être couplés l'un à l'autre par paire au moyen du dispositif de serrage (130, 132), pour appliquer dans la paroi (120) la force de déformation (F, $F_1$, $F_2$) dans la direction du point central de surface (M), ou
- les éléments d'application de charge (128, 129) sont disposés sur la paroi (120) de telle manière que la force de déformation (F) est excentrique, donc est appliquée dans la paroi (120) dans une direction s'étendant de manière éloignée par rapport au centre de surface (M) et/ou dans laquelle la paroi (120) comprend un matériau en acier, en particulier un matériau en acier à haute résistance, et le matériau en acier a été de préférence traité thermiquement par recuit de détensionnement.

**13.** Section de tour (116) pour une éolienne (100) selon l'une quelconque des revendications 11 ou 12,

dans laquelle la paroi (120) présente deux zones de bord (122) avec respectivement un bord (124) s'étendant dans la direction longitudinale (L), qui sont espacées l'une par rapport à l'autre dans la direction périphérique, et dans laquelle les bords (124) sont mis au point pour passer le long l'un de l'autre lors de la déformation élastique de la section de tour (116) si bien que les zones de bord (122) se chevauchent dans l'état élastiquement déformé de la section de tour (116).

**14.** Procédé d'installation d'une éolienne sur un site d'installation, comprenant les étapes

- de mise à disposition d'une section de tour (112, 114, 116) maintenue dans un état élastiquement déformé selon l'une quelconque des revendications 11 à 13,
- de détente de la section de tour (112, 114, 116) sur le site d'installation si bien que celle-ci occupe un état sans charge avec une hauteur verticale ($h_1$) dans la position de transport,
- de mise à disposition d'une bride de raccordement (118) sur le site d'installation,
- de fixation de la bride de raccordement (118) sur une partie côté extrémité de la section de tour (112, 114, 116), en particulier au moyen de liaisons par pattes,
- de redressement de la section de tour (112, 114, 116) de telle manière que la direction longitudinale (L) s'étende sensiblement de manière verticale et que la bride de raccordement (118) soit disposée sur l'extrémité côté sol de la section de tour (112, 114, 116),
- de liaison de la section de tour (112, 114, 116), au moyen de la bride de raccordement (118) ; à une fondation encastrée dans le sol du site d'installation, en particulier dans une cage de fondation,

dans laquelle la mise à disposition de la section de tour (112, 114, 116) sur le site d'installation est effectuée au moyen d'un procédé selon l'une quelconque des revendications 1 à 10.

FIG. 1

FIG. 2a

FIG. 2b

FIG. 3a

FIG. 3b

FIG. 4a

FIG. 4b

FIG. 4c

FIG. 5

FIG. 6

FIG. 7

FIG. 8

FIG. 9

FIG. 10

FIG. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110176904 A1
- US 20170253169 A1

- US 10041479 B2